# EUROPÄISCHE PATENTANMELDUNG

(11) **EP 2 839 861 A2**
(43) Veröffentlichungstag der Anmeldung: **25.02.2015**
(21) Anmeldenummer: 14002608.9
(22) Anmeldetag: 26.07.2014
(51) Int. Cl.: A62C 2/06, F16L 5/04

(54) **Brandschutzvorrichtung zur Absicherung einer eine Versorgungsleitung durchführenden Decken- oder Wandöffnung im Brandfalle**

(30) Priorität: 22.08.2013 DE 102013014511
(71) Anmelder: Aik Flammadur Brandschutz GMBH, 34123 Kassel (DE)
(72) Erfinder: Hansen, Jörg, 34253 Lohfelden (DE)
(74) Vertreter: Walther, Walther & Hinz GbR

(57) **Zusammenfassung**

Gegenstand der Erfindung ist eine Brandschutzvorrichtung zur Absicherung einer eine Versorgungsleitung (100) durchführenden Decken- (102) oder Wandöffnung im Brandfalle, bei der wegen der Eigenbewegung der Versorgungsleitung (100) zwischen einer Decke (108) einerseits und der Versorgungsleitung (100) andererseits ein Ringspalt vorgesehen ist. Eine Brandschutzvorrichtung der eingangs genannten Art zu schaffen, die im Brandfalle auch den notwendigen Ringspalt entsprechend den Brandschutzvorrichtungen ausreichend absichert, wird dadurch erreicht, dass auf der Versorgungsleitung (100) im Bereich der Deckenöffnung (102) eine Brandschutzauflage (100) aus einem intumeszierenden Brandschutzmaterial vorgesehen ist und dass eine den Ringspalt abdeckende Rauchgasabdichtung (106) vorgesehen ist.

## Beschreibung

Die vorliegende Erfindung betrifft eine Brandschutzvorrichtung gemäß dem Oberbegriff des Anspruches 1.

In Kraftwerken oder Industrieanlagen, aber auch in Schiffen oder Zügen sind speziell ertüchtigte Brandschutzwände oder Decken vorgesehen, die eine schnelle Ausbreitung eines Feuers oder der damit einhergehenden Hitze, bzw. des damit einhergehenden Rauches verhindern sollen. Gleichzeitig müssen aber Versorgungsleitungen durch diese Brandschutzwände oder -decken hindurchgeleitet werden, wofür entsprechende Decken- oder Wandöffnungen vorgesehen sind, die im Brandfalle mit einer Brandschutzvorrichtung zumindest für eine gewisse Zeit verschlossen werden. Hierzu wird üblicherweise die Decken- oder Wandöffnung nach Montage der Versorgungsleitung mit einer Brandschutzvorrichtung in Form von Mörtel verschlossen.

In vielen Fällen, insbesondere bei Versorgungsleitungen mit einem Durchmesser von mehr als 160 mm, kommt es nun vor, dass aufgrund der Eigenvibration der Versorgungsleitungen oder der Wand bzw. Decke, oder auch aufgrund von thermischer Ausdehnung sowohl der Versorgungsleitung, als auch der Wand oder Decke die starre Mörtelverbindung oder gar die Wand oder Decke selbst beschädigt wird. Dabei kann sich um die Versorgungsleitung herum ein Ringspalt ausbilden, der dann keinerlei Brandschutz mehr aufweist. Auch kann ein Riss in der Wand die gesamte Statik des Gebäudes negativ beeinflussen.

Um Beschädigungen an der Wand oder Decke zu vermeiden und um zumindest einen gewissen Brandschutz zur realisieren, wird deshalb häufig schon bereits beim Einbau der Versorgungsleitung ein Ringspalt vorgesehen und dieser wird dann zum Beispiel mit elastisch nachgiebiger Mineralwolle oder mit einem hitzebeständigen, elastischen Schaumstoff abgedichtet. Um einen den Vorschriften entsprechenden Brandschutz zu erreichen, ist es oft notwendig, die Mineralwolle oder den Schaumstoff außer im Bereich der Wand- und Deckenöffnung auch noch eine gewisse Strecke darüber hinaus vorzusehen. Eine solche Streckenisolierung ist nicht nur aufwendig, auch steht häufig der dafür benötigte Platz nicht zur Verfügung.

Der Einsatz eines Isoliermaterials aus Mineralwolle oder Schaumstoff birgt die Gefahr, dass dieses im Brandfalle in sich zusammenfällt oder das es sich auflöst mit der Folge, dass an dieser Stelle eine ungewollte Öffnung entsteht, durch die das Feuer, die Hitze oder der Rauch unkontrolliert hindurchgelangen kann.

Davon ausgehend liegt der vorliegenden Erfindung die Aufgabe zugrunde, eine Brandschutzvorrichtung der eingangs genannten Art zu schaffen, die im Brandfalle auch den notwendigen Ringspalt entsprechend den Brandschutzvorschriften ausreichend absichert, einen geringen Platzbedarf aufweist und kostengünstig ist.

Als technische Lösung dieser Aufgabe wird erfindungsgemäß eine Brandschutzvorrichtung mit den Merkmalen des Anspruches 1 vorgeschlagen. Vorteilhafte Weiterbildungen dieser Brandschutzvorrichtung sind den Unteransprüchen zu entnehmen.

Eine nach dieser technischen Lehre ausgebildete Brandschutzvorrichtung hat den Vorteil, dass die an der Versorgungsleitung angebrachte Brandschutzauflage bei Überschreiten einer Reaktionstemperatur aufschäumt und das Volumen derart vergrößert, dass der gesamte Ringspalt abgedichtet ist. Für den Fall, dass lediglich eine Rauchentwicklung entsteht, ohne dass eine große Hitze vorliegt, ist eine den Ringspalt abdeckende Rauchgasabdichtung vorgesehen, um einen Übertritt des Rauches von einem Raum in den anderen Raum zu verhindern.

Die Anbringung der Brandschutzauflage direkt auf der Versorgungsleitung hat den Vorteil, dass in der Versorgungsleitung transportierte Wärme direkt das intumeszierende Material erreicht, wobei beim Aufschäumen des Materials eine endotherme Reaktion abläuft, die die in der Versorgungsleitung vorhandene Energie aufnimmt und damit für eine gewisse Zeit auch eine Kühlung der Versorgungsleitung bewirkt. Somit wird eine Weiterleitung der Hitze durch die Versorgungsleitung in den nächsten Raum verzögert.

In einer anderen Ausführungsform ist die Versorgungsleitung von einem Isoliermaterial, z. B. Steinwolle umgeben. Dies ist insbesondere dann vorteilhaft, wenn die Versorgungsleitung selber ein heißes Medium transportiert. In diesem Falle kann die Brandschutzauflage außen an der Isolierschicht angebracht werden, sodass das heiße Medium innerhalb der Versorgungsleitung nicht unbeabsichtigterweise das Brandschutzmaterial zum Reagieren bringt. Eine solche Anordnung hat einerseits den Vorteil, dass das intumeszierende Brandschutzmaterial den Ringspalt abdichtet. Ein weiterer Vorteil besteht aber darin, dass im Brandfalle ein durch die zusammenfallende Mineralwolle entstehender Hohlraum ebenfalls durch das intumeszierende Brandschutzmaterial ausgeführt wird.

In einer anderen, ebenfalls bevorzugten Ausführungsform ist sowohl zwischen dem Isoliermaterial und der Versorgungsleitung als auch außen auf der Versorgungsleitung eine Brandschutzauflage vorgesehen. So addieren sich die oben genannten Vorteile, denn einerseits kann die Brandschutzauflage durch Aufzehren der Energie in der Versorgungsleitung lokal eine Kühlung erzeugen und andererseits kann durch das Aufschäumen des Brandschutzmaterials neben dem Ringspalt auch eventuell durch zusammenfallendes Isoliermaterial frei werdender Raum aufgefüllt werden.

In einer besonders vorteilhaften Ausführungsform ist die Brandschutzauflage als Brandschutzbandage ausgeführt, die aus einem dünnen Streifen des intumeszierenden Brandschutzmaterials gebildet ist. Diese Brandschutzbandage kann entweder in axialer Richtung an der Versorgungsleitung angebracht werden oder diese Brandschutzbandage kann die Versorgungsleitung umwickeln.

Zur Abdichtung des Ringspaltes im Brandfalle ist es ausreichend, die Brandschutzauflage lediglich im Bereich der Wand- oder Deckenöffnung anzubringen. Eine Streckenabdichtung, wie sie aus dem Stand der Technik bekannt ist, ist erfindungsgemäß nicht erforderlich.

Dabei hat es sich als vorteilhaft erwiesen, ein intumeszierendes Brandschutzmaterial zu verwenden, welches eine niedrige Reaktionstemperatur von höchstens 120°C, vorzugsweise von 80°C aufweist. Dieses Brandschutzmaterial reagiert schon bei vergleichsweise niedrigen Temperaturen und verschließt somit frühzeitig den Ringspalt, bevor eine signifikante Menge von Hitze in den benachbarten Raum gelangt.

In einer bevorzugten Ausführungsform ist die Rauchgasabdichtung aus einem dauerelastischen Dünnblech oder einem dauerelastischen Kunststoff gebildet, der einerseits an der Wand oder Decke dicht anliegt und andererseits an der Versorgungsleitung dicht anliegt. Das elastische Dünnblech oder der dauerelastische Kunststoff kann die an der Versorgungsleitung und/oder an der Wand oder Decke auftretenden Schwingungen oder Vibrationen aufnehmen, sodass eine Beschädigung der Wand oder Decke dauerhaft vermieden wird. Dabei hat es sich als vorteilhaft erwiesen, die Rauchgasabdichtungen geschwungen oder gewellt auszuführen, um die Eigenbewegung der Versorgungsleitung gut kompensieren zu können.

In einer bevorzugten Ausführungsform umfasst die Rauchgasabdichtung eine erste Rauchgasabdeckung an einer ersten Seite der Wand- oder Deckenöffnung und eine zweite Rauchgasabdichtung an einer zweiten Seite der Wand- oder Deckenöffnung. Dies hat den Vorteil, dass die Rauchgasabdeckung nicht feuerfest sein muss und somit optimal zur Aufnahme der Vibrationen oder Schwingungen ausgelegt werden kann. Im Brandfalle ist es dabei unproblematisch, wenn die dem Brandherd zugewandte Rauchgasabdichtung zerstört wird, weil die zweite, auf der anderen Seite der Wand oder Decke liegende Rauchgasabdichtung immer noch eine gute Abdichtung des Ringspaltes gewährleistet. Diese zweite Rauchgasabdichtung ist dann durch das intumeszierende Brandschutzmaterial geschützt und kann von dem Feuer nicht so schnell zerstört werden.

Die erfindungsgemäße Brandschutzvorrichtung kann auch zum Abdichten von Fugen oder Spalten an Bauwerken verwendet werden. Dabei wird das intumeszierende Brandschutzmaterial innerhalb der Fuge oder Spalte am Bauwerk angebracht, während die Rauchgasabdichtung fugen- oder spaltübergreifend an den jeweils benachbarten Teil des Bauwerks dicht angebracht wird.

Weitere Vorteile der erfindungsgemäßen Brandschutzvorrichtung ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine geschnitten dargestellte Deckenöffnung mit einer durchgeführten Versorgungsleitung und einer ersten Ausführungsform einer erfindungsgemäßen Brandschutzvorrichtung;
- Fig. 2: eine geschnitten dargestellte Deckenöffnung mit einer durchgeführten Versorgungsleitung und einer zweiten Ausführungsform einer erfindungsgemäßen Brandschutzvorrichtung;
- Fig. 3: eine geschnitten dargestellte Deckenöffnung mit einer durchgeführten Versorgungsleitung und einer dritten Ausführungsform einer erfindungsgemäßen Brandschutzvorrichtung;
- Fig. 4: eine geschnitten dargestellte Deckenöffnung mit einer durchgeführten Versorgungsleitung und einer vierten Ausführungsform einer erfindungsgemäßen Brandschutzvorrichtung;
- Fig. 5: eine geschnitten dargestellte Deckenöffnung mit einer durchgeführten Versorgungsleitung einer fünften Ausführungsform einer erfindungsgemäßen Brandschutzvorrichtung;
- Fig. 6: eine schematische Darstellung einer Versorgungsleitung mit einer Rauchgasabdeckung einer sechsten Ausführungsform einer erfindungsgemäßen Brandschutzvorrichtung;
- Fig. 7: eine schematische Darstellung einer Versorgungsleitung mit einer Rauchgasabdeckung einer siebten Ausführungsform einer erfindungsgemäßen Brandschutzvorrichtung;
- Fig. 8: eine schematische Darstellung einer Versorgungsleitung mit einer Rauchgasabdeckung einer achten Ausführungsform einer erfindungsgemäßen Brandschutzvorrichtung;
- Fig. 9: ein geschnitten dargestellter Teil eines Bauwerkes mit einem Spalt, der mit einer neunten Ausführungsform einer erfindungsgemäßen Brandschutzvorrichtung abgesichert ist.

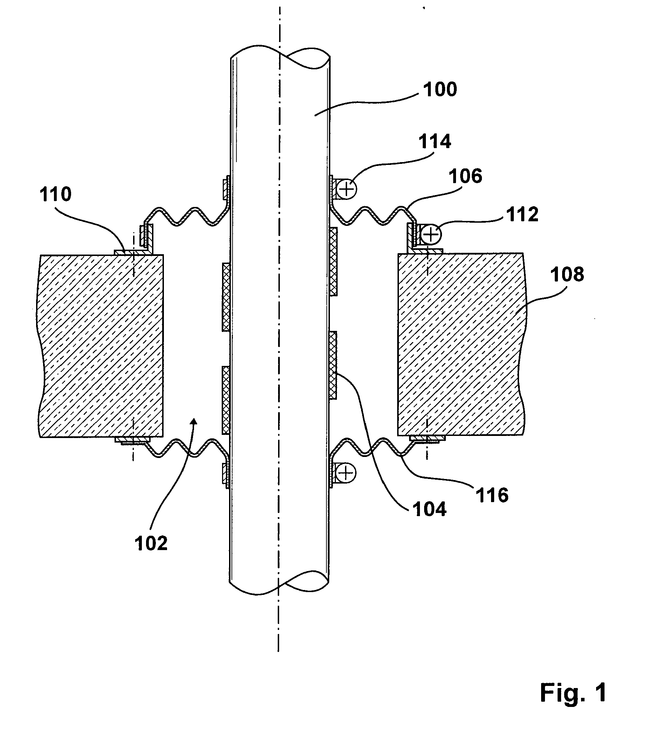

Fig. 1 zeigt eine erste Ausführungsform einer erfindungsgemäßen Brandschutzvorrichtung zur Absicherung einer an der Versorgungsleitung 100 durchführende Decken- 102 oder Wandöffnung. Diese Versorgungsleitung 100 kann ein Kabel, eine Gasleitung, eine Wasserleitung, eine Datenleitung oder eine Kombination der vorgenannten sein. Unmittelbar auf der Versorgungsleitung 100 ist eine Brandschutzbandage vorgesehen, wobei die Brandschutzbandage aus einem dünnen Streifen aus intumeszierendem Brandschutzmaterial gebildet ist und wendelförmig um die Versorgungsleitung 100 herum gewickelt ist.

Auf einer ersten Seite der Deckenöffnung 102 ist eine Rauchgasabdeckung 106 vorgesehen, die aus einem gewellten dauerelastischen Dünnblech hergestellt ist. Zur Abdichtung der Rauchgasabdichtung 106 ist an einer Decke 108 ein im Querschnitt L-förmiger Flunsch 110 angeschraubt, an dessen abstehendem Flügel die Rauchgasabdeckung 106 mittels einer Rohrschelle 112 befestigt ist. Auf der anderen Seite der Rauchgasabdeckung 106 ist diese ebenfalls über eine Rohrschelle 114 dicht an der Versorgungsleitung 100 gehalten.

Die Rauchgasabdichtung 106 weist an einer Stelle einen in radialer Richtung verlaufenden Schlitz auf, sodass die Rauchgasabdichtung 106 in einfacher Weise um die Versorgungsleitung 100 herumgelegt werden kann. Dabei ist dieser hier nicht mehr dargestellte Schlitz überlappend ausgebildet, sodass nach Montage der Rauchgasabdichtung 106 der Schlitz zum Beispiel mittels Schrauben oder mittels Verklebung rauchdicht verschlossen werden kann.

Die hier dargestellte Rauchgasabdichtung 106 besitzt einen der Decke 108 zugewandten zylindrischen Abschnitt, der am winkelförmigen Flunsch 110 zur Anlage kommt. Im Innenbereich besitzt die Rauchgasabdichtung 106 ebenfalls einen zylindrisch ausgebildeten Abschluss, der an der Versorgungsleitung 100 zur Anlage kommt. Beide zylindrischen Abschnitte dienen zur Anlage der Rohrschellen 112 bzw. 114.

An der gegenüberliegenden Seite der Deckenöffnung 102 ist eine alternative Ausführungsform der Rauchgasabdichtung dargestellt, bei der der an der Decke 108 zur Anlage kommende Abschnitt flanschförmig ausgebildet ist und eine in radialer Richtung zur Anlage an der Decke 108 kommende Fläche aufweist, wird die Rauchgasabdeckung 116 mittels Schrauben an der Decke 108 gehalten.

Die Brandschutzbandage 104 ist lediglich zwischen der ersten Rauchgasabdeckung 106 und der zweiten Rauchgasabdeckung 116 vorgesehen.

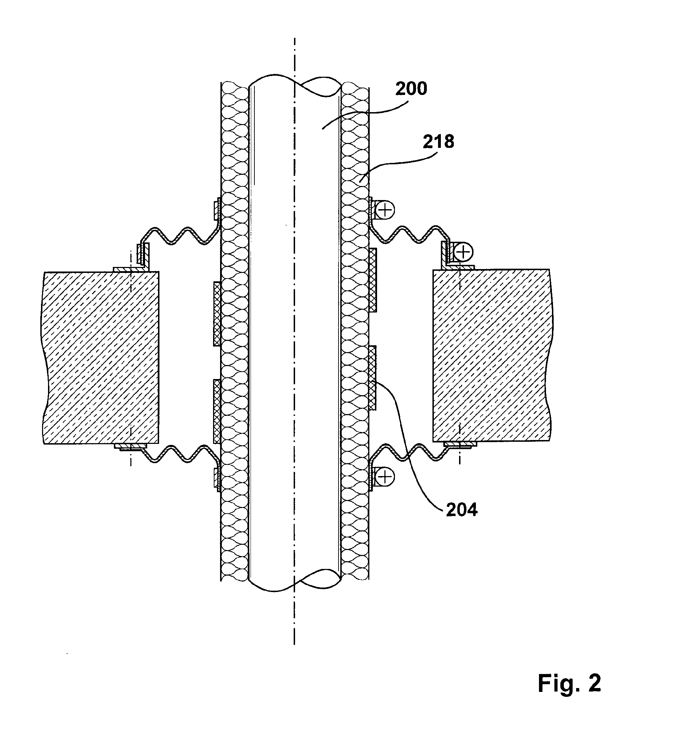

Fig. 2 zeigt eine zweite Ausführungsform einer erfindungsgemäßen Brandschutzvorrichtung, die sich von der in Fig. 1 dargestellten Ausführungsform lediglich dadurch unterscheidet, dass hier die Versorgungsleitung 200 mit einer Isolierung 218 umgeben ist. Dementsprechend ist auch die Brandschutzbandage 204 nicht unmittelbar an der Versorgungsleitung 200 sondern außen an der Isolierung 218 angebracht.

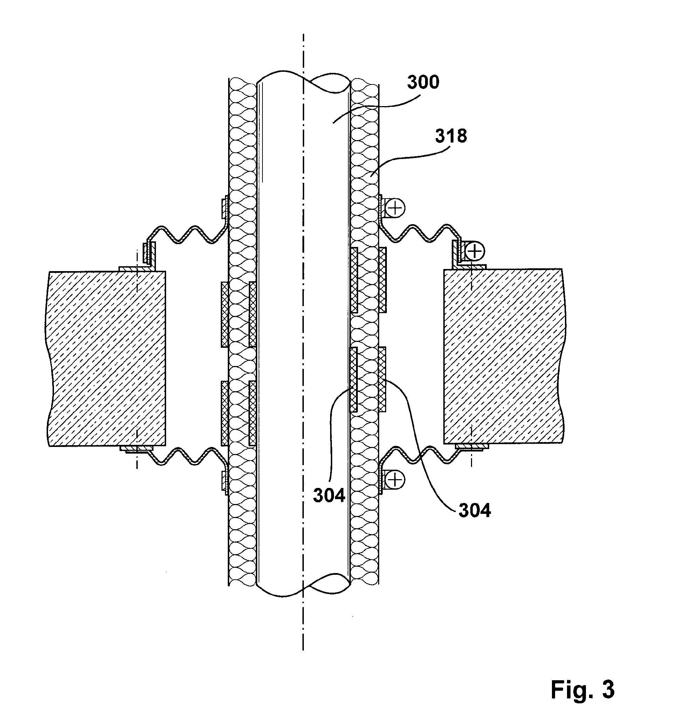

Die in Fig. 3 dargestellte dritte Ausführungsform einer erfindungsgemäßen Brandschutzvorrichtung unterscheidet sich von der in Fig. 2 dargestellten zweiten Ausführungsform lediglich dadurch, dass zusätzlich zu der außen auf der Isolierung 318 angebrachten Brandschutzbandage 304 eine zweite Brandschutzbandage 304 unmittelbar auf der Versorgungsleitung 300 angebracht ist.

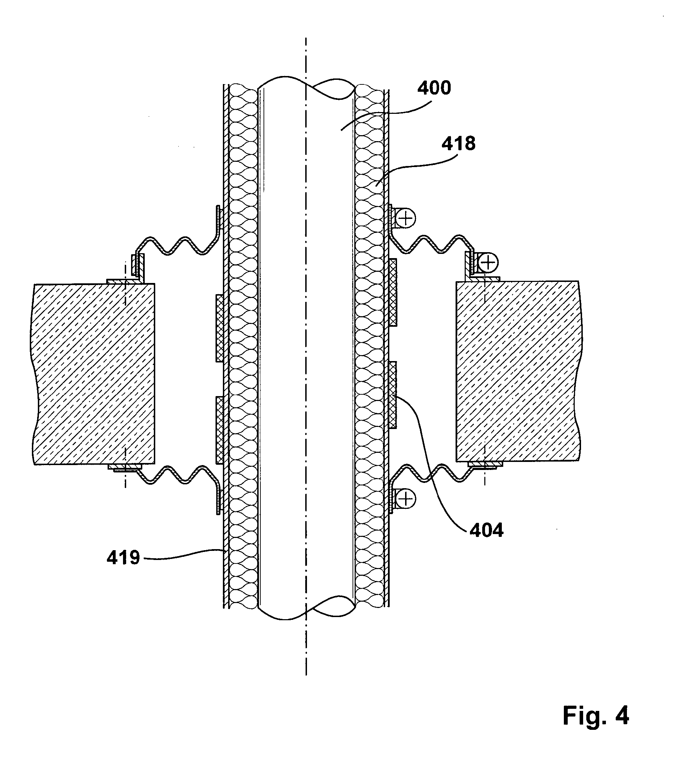

Die in Fig. 4 dargestellte vierte Ausführungsform der erfindungsgemäßen Brandschutzvorrichtung unterscheidet sich von den vorherigen Ausführungen dadurch, dass auf der Versorgungsleitung 400 neben der Isolierung 418 auch eine Blechkaschierung 419 angebracht ist, wobei die Brandschutzbandage außen auf die Blechkaschierung aufgebracht ist. Dabei ist die schmale und längliche Brandschutzbandage außen um die Blechkaschierung 419 gewickelt. Eine derartige Blechkaschierung 419 wird vorzugsweise bei Versorgungsleitungen eingesetzt, die bauartbedingt sehr warm werden können. Gleichzeitig ist die Blechkaschierung 419 ein guter Wärmeleiter, sodass im Brandfalle die durch den Brandherd entstandene Hitze sehr schnell in den Bereich der Deckenöffnung geleitet wird und die Brandschutzbandage 404 wird über den kritischen Punkt hin erwärmt, sodass das Brandschutzmaterial aufschäumt und somit eine gute Abdichtung der Deckenöffnung realisiert.

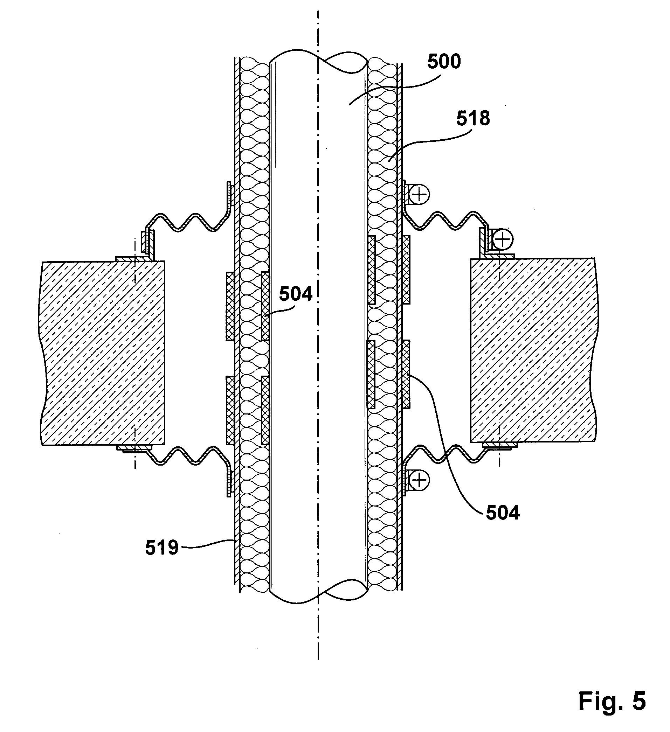

Die in Fig. 5 dargestellte fünfte Ausführungsform einer erfindungsgemäßen Brandschutzvorrichtung, die sich von der zuvor beschriebenen vierten Ausführungsform dadurch unterscheidet, dass zusätzlich zu der Brandschutzbandage 504 auf der Außenseite der Blechkaschierung 519 eine weitere Brandschutzbandage 504 unmittelbar auf der Versorgungsleitung 500 angebracht ist. Hierdurch wird, wie zu Fig. 4 beschrieben, eine gute Abdichtung der Deckenöffnung erreicht und darüber hinaus wird der Bereich zwischen der Versorgungsleitung 500 und der Blechkaschierung 519 durch die zweite Brandschutzbandage 504 ebenfalls abgedichtet. Ein zusätzlicher Effekt ist dabei, dass die innenliegende Brandschutzbandage 504 bei ihrer endothermen Reaktion Energie aufnimmt und so zum Brandschutz beiträgt.

In einer weiteren, hier nicht dargestellten Ausführungsform ist die innere Brandschutzbandage nicht unmittelbar auf der Versorgungsleitung, sondern auf der Isolierung angebracht ist. Die äußere Brandschutzbandage bleibt dabei auf der Blechkaschierung, wie in der fünften Ausführungsform beschrieben. Dies hat den Vorteil, dass bei einem Transport von heißen Medien in der Versorgungsleitung die unter der Blechkaschierung liegende Brandschutzbandage nicht vorzeitig aufschäumt.

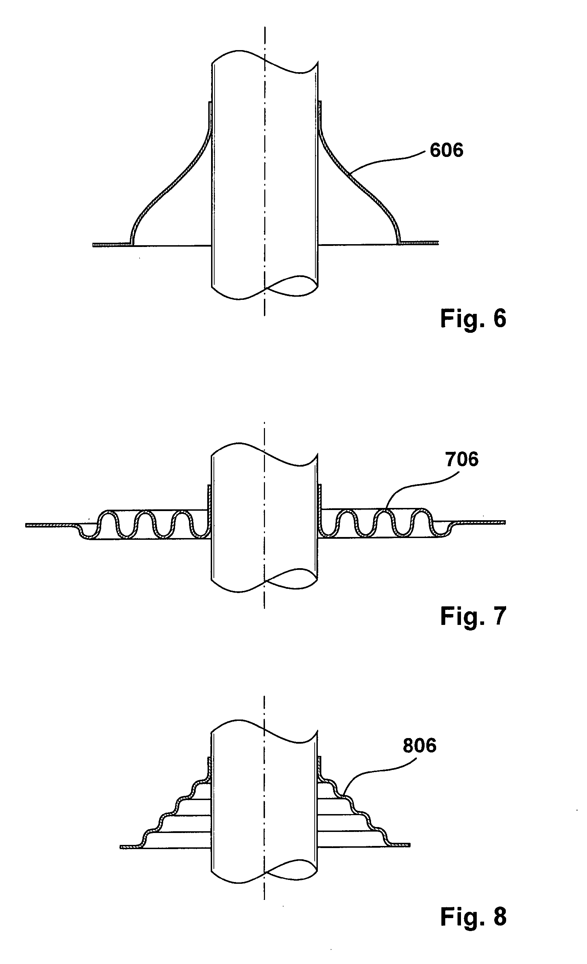

In den Figuren 6 bis 8 sind weitere Ausführungsformen einer erfindungsgemäßen Rauchgasabdichtung 606, 706, 806 dargestellt. Dabei ist die in Fig. 6 dargestellte Brandschutzabdichtung 606 zwischen dem zylindrischen Abschnitt und dem Flanschabschnitt gewölbt ausgebildet, während die in Fig. 7 dargestellte Brandschutzabdichtung 706 mäanderförmig ausgebildet ist. Die in Fig. 8 dargestellte Brandschutzabdichtung 806 ist hingegen stufenförmig geformt. Diese Brandschutzabdichtungen können aus einem dauerelastischen Dünnblech, einem dauerelastischen Kunststoff, gebildet sein.

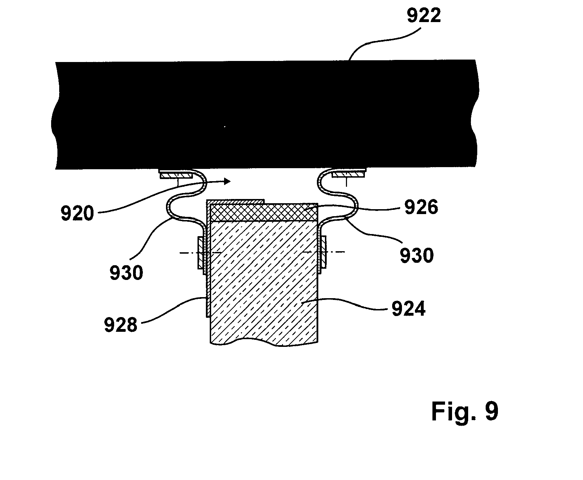

In Fig. 9 ist eine neunte Ausführungsform einer erfindungsgemäßen Brandschutzvorrichtung dargestellt, die einen Spalt 920 zwischen zwei Betonteilen 922, 924 abdichtet. Dabei ist an einer Stirnseite des Betonteiles 24 eine Brandschutzauflage 926 aus intumeszierendem Material angebracht. Außerdem ist an dem Betonteil 920 ein metallischer Winkel 928 vorgesehen, der von außerhalb der Brandschutzabdichtung bis zum intumeszierenden Brandschutzmaterial reicht. Über diesen Winkel soll im Brandfalle auftretende Wärme möglichst schnell zum Brandschutzmaterial geleitet werden, um hier die Reaktion und das Aufschäumen zu starten, damit der Spalt 920 möglichst bald durch das intumeszierende Brandschutzmaterial abgedichtet wird. Es versteht sich, dass dieser metallische Winkel 928 auch auf der anderen Seite oder gar auf beiden Seiten angebracht werden kann.

Hier ist die Brandschutzabdichtung nicht kreisrund wie bei den anderen Ausführungsformen sondern länglich ausgebildet, um den Spalt 920 gut abzudecken. Auch hier ist die Brandschutzabdichtung 930 aus einem gewellten, dauerelastischen Dünnblech gebildet und mittels Schrauben an den Betonteilen 922, 924 befestigt.

## Patentansprüche

1. Brandschutzvorrichtung zur Absicherung einer eine Versorgungsleitung (100, 200, 300, 400, 500) durchführenden Decken- (102) oder Wandöffnung im Brandfalle, bei der wegen der Eigenbewegung der Versorgungsleitung (100, 200, 300, 400, 500) zwischen einer Decke (108) oder Wand einerseits und der Versorgungsleitung (100, 200, 300, 400, 500) andererseits ein Ringspalt vorgesehen ist,
**dadurch gekennzeichnet,**
**dass** auf der Versorgungsleitung (100, 200, 300, 400, 500) im Bereich der Decken- (102) oder Wandöffnung eine Brandschutzauflage (104, 204, 304, 404, 504) aus einem intumeszierenden Brandschutzmaterial vorgesehen ist und dass eine den Ringspalt abdeckende Rauchgasabdichtung (106, 606, 706, 806) vorgesehen ist.

2. Brandschutzvorrichtung nach Anspruch 1,
**dadurch gekennzeichnet,**
**dass** die Rauchgasabdichtung eine erste Rauchgasabdeckung (106, 606, 706, 806) zur Anbringung auf einer ersten Seite der Decken- (102) oder Wandöffnung und eine zweite Rauchgasabdeckung (106, 606, 706, 806) zur Anbringung auf einer zweiten Seite der Decken- (102) oder Wandöffnung vorgesehen ist.

3. Brandschutzvorrichtung nach einem der vorangehenden Ansprüche,
**dadurch gekennzeichnet,**
**dass** die Rauchgasabdeckung (106, 606, 706, 806) aus einem dauerelastischen Dünnblech oder einem dauerelastischen Kunststoff gebildet ist.

4. Brandschutzvorrichtung nach einem der vorangehenden Ansprüche,
**dadurch gekennzeichnet,**
**dass** die Rauchgasabdeckung (106, 606, 706, 806) geschwungen oder gewellt ausgeführt ist, um die Eigenbewegung der Versorgungsleitung (100, 200, 300, 400, 500) zu kompensieren.

5. Brandschutzvorrichtung nach einem der Ansprüche 2 bis 4,
**dadurch gekennzeichnet,**
**dass** die Brandschutzauflage (104, 204, 304, 404, 504) zwischen der ersten (106) und der zweiten Rauchgasabdeckung (116) angeordnet ist.

6. Brandschutzvorrichtung nach einem der vorangehenden Ansprüche,
**dadurch gekennzeichnet,**
**dass** die Brandschutzauflage als eine Brandschutzbandage (104, 204, 304, 404, 504) ausgeführt ist, die aus mindestens einem außen an der Versorgungsleitung (100, 200, 300, 400, 500) oder außen an der Isolierung der Versorgungsleitung (100, 200, 300, 400, 500) angebrachten Streifen aus intumeszierendem Brandschutzmaterial gebildet ist.

7. Brandschutzvorrichtung nach Anspruch 6,
**dadurch gekennzeichnet,**
**dass** die Brandschutzbandage (104, 204, 304, 404, 504) aus mindestens einem um die Versorgungsleitung (100, 200, 300, 400, 500) oder um die Isolierung der Versorgungsleitung (100, 200, 300, 400, 500), gewickelten Streifen aus intumeszierendem Brandschutzmaterial gebildet ist.

8. Brandschutzvorrichtung nach einem der Ansprüche 6 oder 7,
**dadurch gekennzeichnet,**
**dass** die Brandschutzauflage eine erste Brandschutzbandage (304, 504) direkt auf der Versorgungsleitung (300, 500) und eine zweite Brandschutzbandage (304, 504) außen auf der Isolierung (318, 518) umfasst.

9. Brandschutzvorrichtung nach einem der voranstehenden Ansprüche,
**dadurch gekennzeichnet,**
**dass** das intumeszierende Brandschutzmaterial eine niedrige Reaktionstemperatur von höchstens 120°C, vorzugsweise 80°C aufweist.

10. Verwendung einer Brandschutzvorrichtung nach einem der vorangehenden Ansprüche zur Absicherung von Fugen oder Spalten an Bauwerken, wobei die Brandschutzbandage direkt am Bauwerk angebracht ist.
